# EUROPEAN PATENT APPLICATION

(11) **EP 4 549 067 A1**
(43) Date of publication of application: **07.05.2025**
(21) Application number: 24207881.4
(22) Date of filing: 21.10.2024
(51) Int. Cl.: B23C 5/20, B23C 5/06, B23C 5/22

(54) **TOOL AND CUTTING PLATE FOR THIS PURPOSE**

(30) Priority: 27.10.2023 DE 102023210680
(71) Applicant: Kennametal Inc., Latrobe, PA 15650-0231 (US)
(72) Inventor: LIEBER, Andreas, Latrobe, 15650-0231 (US); SCHLEICHER, Sebastian, Latrobe, 15650-0231 (US); SPITZENBERGER, Konrad, Latrobe, 15650-0231 (US)
(74) Representative: FDST Patentanwälte

(57) **Abstract**

A tool (2) is provided, which comprises at least one cutting plate (4) for machining a workpiece, comprising a carrier (6), having a plate seat (8) for the cutting plate (4), wherein the cutting plate (4) comprises a cutting edge (10) for machining the workpiece, wherein the cutting plate (4) comprises a cutting corner (12) where the cutting edge (10) terminates, wherein the cutting plate (4) comprises a lateral face (24) having a contact face (26) and a clearance face (28), wherein the contact face (26) abuts the plate seat (8), wherein the clearance face (28) is circumscribed by the cutting edge (10), wherein, at least at the cutting corner (12), the clearance face (28) protrudes in relation to the contact face (26). Furthermore, a corresponding cutting plate (4) for such a tool (2) is provided.

## Description

### Background of the invention

The invention relates to a tool as well as a cutting plate, in particular an indexable insert plate, for this purpose.

One or more cutting plates are typically fastened to a carrier of a tool and are thus exchangeable. The tool, and thus the inserts, rotate about an axis of rotation while operating. In this manner, a workpiece can be machined, wherein, by means of the cutting plates, chips can be lifted away from the workpiece.

A tool having cutting plates is disclosed for example in WO 95 07784 A1.

The cutting plate typically comprises at least one cutting corner, which is heavily stressed during the machining of a workpiece and can easily break off. The design of the cutting corner is of particular importance for the cutting performance and the stability at low axial depth, as well as with respect to possible chatter.

### Problem of the invention

With this in mind, the problem addressed by the invention is to specify an improved cutting plate. The cutting plate is intended to be as stable as possible, especially at the cutting corner. Furthermore, a correspondingly improved tool is to be specified.

### Solution of the problem

The problem is solved according to the invention by a tool having the features according to claim 1 and by a cutting plate having the features according to claim 12. Advantageous configurations, further developments, and variants are the subject-matter of the subclaims. The statements made in connection with the tool also apply to the cutting plate and vice versa.

A core idea of the present invention is in particular to design a lateral face of a cutting plate in a targeted manner such that the cutting plate is reinforced, specifically in the region of the cutting corner, and in particular below it, and is thereby particularly stable. The lateral face is designed so that as much material as possible is available at the cutting corner, i.e., the cutting plate is configured here as solidly as possible, but at the same time the lateral face is also designed such that the cutting plate can be mounted in the specified plate seat of a tool. According to the invention, the lateral face is broken into several sub-faces for this purpose and in particular not formed as a simple, planar surface. This results in a high design freedom, which allows reinforcement of the cutting corner, specifically in the presence of a plate seat.

The tool according to the invention comprises at least one cutting plate for machining a workpiece. The cutting plate is also referred to as an insert. Furthermore, the tool comprises a carrier having a plate seat (also: pocket) for the cutting plate. In the case of a plurality of cutting plates, the carrier has its own plate seat for each cutting plate, in particular. The cutting plates are attached to the carrier and are in particular fastened in the plate seats. For example, the cutting plate comprises a through-hole through which a screw is passed, which is then screwed into the plate seat so that the cutting plate is fastened to the carrier. In the present case, without limiting the generality of the invention, a tool having a plurality of cutting plates is assumed and is also preferred, but the embodiments generally also apply to tools having only one cutting plate. The cutting plates are distributed regularly or irregularly on the carrier and fastened thereto in a single row or in multiple rows.

The tool is preferably a rotary tool and rotates during operation about an axis of rotation corresponding to a longitudinal axis of the carrier. In a suitable configuration, the tool is configured as a milling tool, e.g., a 90° shouldering bur. The plate seats and cutting plates are arranged spaced apart from the axis of rotation in a radial direction (perpendicular to the longitudinal axis). In the present case, without limiting the generality of the invention, such a milling tool is assumed, but the embodiments also apply analogously to drills, lathes, and tools having a centrally positioned cutting plate on the longitudinal axis, for example.

The cutting plate according to the invention comprises (at least) one cutting edge for machining the workpiece. The cutting plate further comprises (at least) one cutting corner where the cutting edge terminates. In general, the cutting edge comprises in particular two ends, one being the aforementioned cutting corner, and the second being a further corner of the cutting plate, which is not necessarily also a cutting corner. The cutting corner is preferably rounded or chamfered, alternatively pointed. The cutting corner and the cutting edge are generally part of a circumferential contour of a front side (also: top side) of the cutting plate.

The cutting plate generally extends in an x-direction, a y-direction, and a z-direction, which are perpendicular to one another in pairs. The x-direction corresponds in particular to the direction of the longitudinal axis and is also referred to as the axial direction. The y-direction corresponds in particular to the radial direction. The z-direction is also referred to as the tangential direction. The cutting plate then has a length in the x-direction, a width in the y-direction, and a height in the z-direction.

The cutting plate also comprises a rear side (also: bottom side) which lies opposite the front side. The rear side is preferably planar; this is not mandatory for the front side. The height of the cutting plate is the maximum distance between the front side and the rear side, measured in the z-direction. Below the cutting corner, the rear side comprises in particular a corresponding (rear) corner, which is connected to the cutting corner via a rim. This rim thus lies below the cutting corner and is also referred to as the cutting corner rim. Accordingly, the cutting plate comprises a cutting corner rim extending from the cutting corner to the rear corner. The cutting corner rim is preferably rounded or chamfered, alternatively pointed, analogously to the cutting corner. The cutting corner rim roughly extends in the z-direction, but is regularly placed at an angle relative thereto so that the cutting plate extends from the rear side and widens towards the front side, i.e., the width and length increase.

The cutting plate also comprises (at least) one lateral face, having a contact face and a clearance face. The lateral face is thus subdivided into two sub-faces, one being the clearance face and the other being the contact face (alternatively, the entire lateral face can also be considered a clearance face equivalently, into which the contact face is then integrated, resulting in a contact face and a residual clearance face). In the publication WO 95 07784 A1 mentioned above, such a subdivision is not given. The lateral face is divided in particular into the clearance face on the one hand and the contact face on the other hand by an imaginary separating line. The clearance face and the contact face are separated by the separating line, namely such that the clearance face lies on one side of the separating line and the contact face on the other side, and both meet quasi-jointly at the separating line. The exact transition from the clearance face to the contact face at the separating line will be described in further detail below.

The contact face abuts the plate seat, and it thus serves as an abutment surface for adjoining to the carrier. Preferably, the contact face is completely covered by the plate seat. Typically, the contact face is placed obliquely (i.e., at an angle greater than 0° to the z-direction), such that when the cutting plate is fastened, it is pulled into the plate seat. The contact face is preferably planar in and of itself, i.e., flat, alternatively however it can be curved, e.g., in the case of a round cutting plate (so-called "round plate").

The clearance face is circumscribed by the cutting edge, i.e., it ends there. When viewed in particular in the z-direction, the clearance face protrudes and projects beyond the plate seat, so that the cutting edge can be engaged with the workpiece during operation. Preferably, the clearance face extends along the entire cutting edge. The clearance face lies between the cutting edge and the contact face, so that the latter does not reach up to the cutting edge.

According to the invention, at least at the cutting corner, the clearance face protrudes over the contact face, in particular perpendicular to the z-direction. As a result, the cutting plate is advantageously reinforced in the region of the cutting corner, in particular starting from the cutting corner, entirely or partially along the cutting corner rim. Due to the protruding clearance face, the cutting plate is more strongly formed there, i.e., with more material, whereby it has an improved stability. This is primarily realized in the region of the cutting corner, but is also advantageous along the entire cutting edge. By contrast to the publication WO 95 07784 A1 mentioned above, the clearance face is thus not simply a continuation of the contact face in the direction of the cutting edge, rather the clearance face is configured differently from the contact face. In other words, the clearance face is designed independently from the contact face, namely with the goal of achieving a reinforcement of the cutting plate at least in the region of the cutting corner. It is particularly important that the clearance face does not merely protrude in and of itself, e.g., simply in the x- and/or y-direction and at an angle to the z-direction, but that the clearance face protrudes in relation to (i.e., relative to) the contact face. In other words, the contact face serves as the reference plane and the clearance face projects outwardly in relation to that reference plane. In this case, two variants are generally possible, one being a simple kink in the lateral face, such that the clearance face and the contact face extend at different angles (angled arrangement of the clearance face and contact face), and the other being a step, so that the clearance face is offset from the contact face (offset arrangement of the clearance face and contact face). Both variants will be discussed in further detail below. Both variants can also be combined with one another.

The phrase "at the cutting corner" means in particular a region adjacent to and/or in the immediate vicinity of the cutting corner, in particular the part of the lateral face that lies below the cutting corner, i.e., starting from the cutting corner and between the cutting corner and the rear side of the cutting plate, specifically along the cutting corner rim. Laterally, i.e., perpendicular to this, the aforementioned region extends from the cutting corner (or generally from the cutting corner rim), for example over a length of 1 % to 50% of a length of the cutting edge. More important than the exact description of the range, however, is that the cutting corner is reinforced by the protruding clearance face and the cutting plate is correspondingly more solid there, specifically when compared to the case of a non-protruding clearance face.

The clearance face and the contact face are separated by a separating line, as already described. In an expedient embodiment, this separating line has an S-shaped or L-shaped curve, generally a buckling curve. In the case of the S-shaped path, the separating line at a first curvature in the direction of the cutting corner rim first drops down in the direction of the rear side, in order to then again extend in the direction of the cutting corner rim at a second curvature, which is curved opposite to the first curvature. The separating line therefore buckles twice. On the other hand, in the case of an L-shaped curve, the separating line only buckles once, namely it first runs in the direction of the cutting corner rim and then bends at a kink point towards the rear side, so that the separating line comprises a total of two legs, a horizontal leg and a vertical leg. The legs form an angle, which is preferably between 50° and 130°, in particular 90°. Alternatively or additionally, the clearance face and the contact face meet at the separating line which runs along the lateral face in the direction of the cutting corner rim and simply drops off towards the rear side of the cutting plate. Due to the S- or L-shaped path that generally leads in the direction of the rear side of the separating line, the clearance face has an increased height in the direction of the cutting corner rim, and the cutting corner is accordingly reinforced, because the greater height of the clearance face in the region of the cutting corner now means that the cutting plate is more solid. In principle, however, the separating line can also simply be straight, and an advantageous reinforcement is thus already achieved at the cutting corner.

Preferably, the clearance face and the contact face are connected via a deburred transition, in particular a hollow groove. The deburred transition has an inner radius. In particular, the deburred transition represents a groove or track across the lateral face. The deburred transition facilitates in particular the production of the cutting plate, specifically when it is produced by a die-casting process, or the like. As a result of the deburred transition, the cutting plate is easier to deform during manufacture. In particular, the deburred transition extends entirely or partially along the separating line, and in particular traces the path of the separating line.

In a first suitable variant, in order to form the clearance face so as to protrude in relation to the contact face, the clearance face is offset from the contact face by a step. The step extends entirely or partially along the separating line and traces its path accordingly. The result of the step in particular is that the clearance face protrudes in relation to the contact face. As a result, the clearance face is displaced in particular in the x- or y-direction in relation to the contact face. With the step, the clearance face represents in particular a shoulder in relation to the contact face. A clearance face, which protrudes due to a step, is also referred to as a balcony, because it has a similar appearance as a building with a balcony. Overall, the result of the step is that the cutting plate is formed more solidly than without the step, due to the offset clearance face. The cutting corner is thus advantageously reinforced and is particularly stable. The clearance face has a clearance angle that is smaller, larger, or the same as a clearance angle of the contact face.

In a suitable second variant, in order to form the clearance face so as to protrude in relation to the contact face, the clearance face has a greater clearance angle (in short: the "angle") than the contact face. The clearance angle refers in particular to the angle that is formed by the lateral face and the workpiece while machining the latter. This clearance angle is preferably positive, so that an in particular wedge-shaped intermediate space is given between the workpiece and the lateral face when machining. In the publication WO 95 07784 A1 mentioned above, the clearance angle on the lateral face is in particular constant from the front side to the rear side. By contrast, in the present case, the clearance angle is now varied, namely such that the clearance angle changes from the contact face to the clearance face. The clearance angle of the contact face is in particular specified by the plate seat of the carrier. However, along the clearance face, the clearance angle can be advantageously varied. If the same clearance angle is used as on the contact face, then the clearance face is preferably at least offset in relation to the contact face. In the present case, however, in the second variant, the possibility of being able to design the clearance face as desired is expediently used in order to strengthen the cutting plate, at least at the cutting corner. In particular, the clearance angle of the clearance face is greater than the clearance angle of the contact face, such that the cutting plate widens more strongly along the clearance face than along the contact face when viewed from the rear side to the front side. The clearance angle of the contact face is preferably in the range of 0° to 20°. The clearance angle of the clearance face is preferably in the range of 0° to 35°. If no additional step is present, then the different clearance angle at least results in a kink in the lateral face. This kink extends entirely or partially along the separating line and traces its path accordingly. Starting from the cutting edge and viewed in the direction of the rear side, the clearance angle of the clearance face is constant or varies along the clearance face. Also viewed along the cutting edge, i.e., depending on the orientation in the x- or y-direction, the clearance angle is either constant or varied. The clearance angle of the contact face, on the other hand, is preferably constant on the entire contact face, so that the contact face is configured so as to be planar overall and thus optimally abuts the plate seat.

The two variants described above (first and second variants) for the transition at the separating line can also be combined, so that the clearance face is then offset from the contact face by a step and at the same time has a different, in particular larger, clearance angle.

Preferably, the clearance face at the cutting corner extends to the rear side of the cutting plate. In other words, the clearance face extends along the entire cutting corner rim, so that the cutting corner is maximally reinforced and particularly stable. In this manner, the cutting plate is reinforced along the entire cutting corner rim. Specifically in the case of a step, but also in general, in particular a foot is formed by the clearance face, on which the cutting corner quasi stands. Depending on the configuration, the foot, i.e., specifically the corresponding corner of the rear side, either protrudes over or abuts the plate seat. Generally, the foot can also be positioned underneath the plate seat, but this is preferably avoided.

The clearance face has a height that is measured between the cutting edge (i.e., the top side) and the contact face (i.e., the separating line). In an expedient embodiment, the height varies along the cutting edge, i.e., the separating line and the cutting edge do not extend parallel to one another. This can alternatively or cumulatively be realized in a variety of ways, namely in that the cutting edge extends in a bent manner, in that the separating line (specifically the step or the kink) extends in a bent manner, or in that the separating line and the cutting edge each extend straight, but not parallel to one another. Overall, the varying height increases the design freedom for the cutting plate, and it is also possible to strengthen the cutting corner in a targeted manner without forming other regions of the cutting plate too solidly, thereby saving material.

Analogously, the contact face also has a height, which is then measured from the clearance face (i.e., the separating line) towards the rear side. The contact face preferably has a constant height, but this is not mandatory and depends on the design of the plate seat, for example.

The cutting plate is suitably polygonal in shape, having a circumferential contour that circumscribes the front side and a plurality of edges, one of which or a plurality of which or all of which are formed as a cutting edge. In the present case, without limiting the generality of the invention, a quadrangular cutting plate is assumed, which is rectangular in shape, having four edges and four corners, two of which are formed as opposing cutting corners. Accordingly, there are also four lateral faces, one for each rim (specifically the cutting edge). Not every lateral face is necessarily divided into a contact face and a clearance face, but this is preferred, especially for an indexable insert plate. In a preferred configuration, the cutting plate is an indexable insert plate. In particular, an indexable insert plate comprises one or more mirrored planes (parallel to the z-direction) and/or an at least two-digit rotational symmetry (about the z-direction) so as to be mounted in different positions in the plate seat and to utilize different cutting edges and cutting corners, depending on the position, when machining the workpiece.

The previous statements regarding the cutting edge and the lateral face adjoining this cutting edge also apply analogously, in particular for one, a plurality of, or all further cutting edges and lateral faces of the cutting plate. In a suitable configuration, in addition to the (first) cutting edge, the cutting plate accordingly comprises a further (second) cutting edge which also terminates at the cutting corner, such that it is now framed by the two aforementioned cutting edges. The cutting edges are not necessarily the same length, e.g., one of the cutting edges is a short cutting edge and the other cutting edge is a long cutting edge. In the case of a quadrangular cutting plate, the cutting edges form an angle of preferably 90° (rectangular or square cutting plate), also suitable is an angle in the range of 50° to 140° (rhombic or parallelogram cutting plate). Triangular and generally polygonal cutting plates are also suitable. Furthermore, in addition to the (first) lateral face, the cutting plate comprises a further (second) lateral face, having a further (second) contact face and a further (second) clearance face. The aforementioned clearance face is then a first clearance face, and the contact face is analogously a first contact face. The further contact face also abuts the plate seat. The further clearance face is circumscribed by the further cutting edge. Analogously to the first clearance face, the further clearance face also protrudes, at least at the cutting corner, with respect to the further contact face. The advantages mentioned thus far apply analogously. The lateral faces, and in particular the separating lines, are not necessarily the same nor do they necessarily mirror one another, rather they can also be designed independently from one another. In this way, many different suitable embodiments are possible. Expediently, the two separating lines meet at the cutting corner rim. In an advantageous embodiment, the two separating lines together form a u- or v-shape, having a tip facing in the direction of the rear side, so that specifically the cutting corner is reinforced. Alternatively or additionally, the separating line of the one lateral face is straight and the separating line of the other lateral face is S-shaped. Alternatively or additionally, both separating lines are S-shaped or L-shaped and/or are configured so as to mirror one another.

### Description of the Figures

Exemplary embodiments of the invention are explained in more detail in the following with the aid of a drawing. The figures show schematically:
Fig. 1 a tool,
Fig. 2 a cutting plate in a perspective view,
Fig. 3 the cutting plate from Fig. 2 in a rear view,
Fig. 4 the cutting plate from Fig. 2 in a lateral view,
Fig. 5 the cutting plate from Fig. 2 in a different lateral view,
Fig. 6 a variant of the cutting plate,
Fig. 7 a further variant of the cutting plate,
Fig. 8 a further variant of the cutting plate,
Fig. 9 a lateral face having different separating lines,
Fig. 10 a cutting plate with a kink,
Fig. 11 a cutting plate with a step.

### Description of the exemplary embodiment

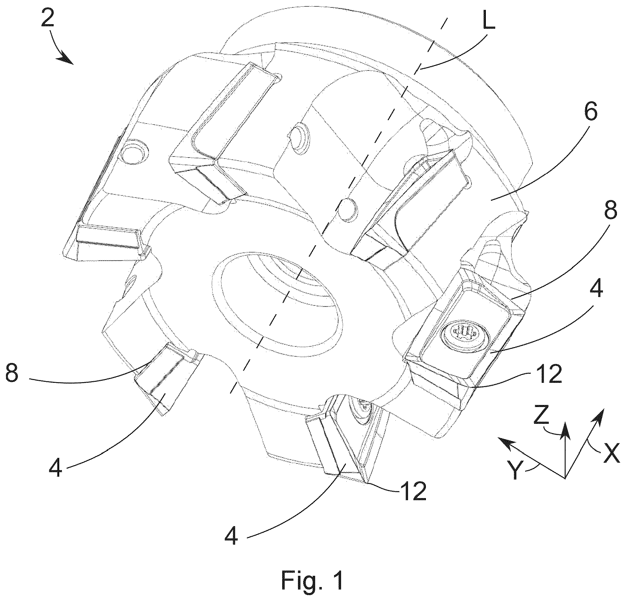

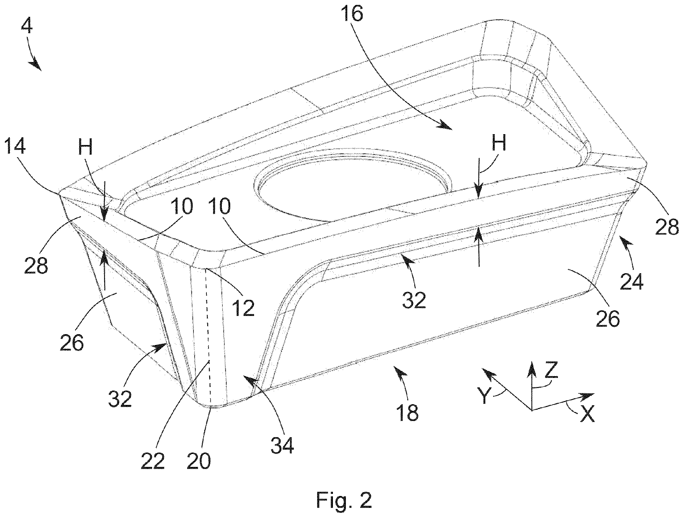

Fig. 1 shows an exemplary embodiment of a tool 2 according to the invention. It comprises at least one and, in this case, even six cutting plates 4 for machining a workpiece (not shown). Various exemplary embodiments for the cutting plate 4 are shown in Figs. 2 to 8. The tool 2 comprises a carrier 6, having a plate seat 8 for the cutting plate 4. The respective cutting plate 4 is attached to the carrier 6 and, for this purpose, fastened in one of the plate seats 8, in the present case by means of a screw.

In the present case, the tool 2 is a rotary tool and rotates during operation about an axis of rotation corresponding to a longitudinal axis L of the carrier 6. The tool 2 shown here is configured as a milling tool, specifically as a 90° shouldering bur. The plate seats 8 and cutting plates 4 are arranged spaced apart from the axis of rotation in a radial direction (perpendicular to the longitudinal axis L). However, in general, the following statements also apply analogously to other tools.

Various embodiments of the cutting plate 4 are shown in Figs. 2 to 8, wherein Figs. 2 to 5 show the same cutting plate 4 in various views. The cutting plate 4 comprises at least one cutting edge 10 (here, four cutting edges 10), for machining the workpiece. The cutting plate 4 further comprises a cutting corner 12 (here, by way of example, two cutting corners 12), at which the cutting edge 10 terminates. In general, the cutting edge 10 comprises two ends, one being the aforementioned cutting corner 12, and the second being a further corner 14, which is not necessarily also a cutting corner 12. The cutting corner 12 is rounded here, by way of example, alternatively it can be chamfered or pointed (not shown). The cutting corner 12 and the cutting edge 10 are generally part of a circumferential contour of a front side 16 (also: top side) of the cutting plate 4.

The cutting plate 4 generally extends in an x-direction X, a y-direction Y, and a z-direction Z, which are perpendicular to one another in pairs. The x-direction X corresponds to the direction of the longitudinal axis L and is also referred to as the axial direction. The y-direction corresponds in particular to the radial direction. The z-direction is also referred to as the tangential direction. The cutting plate 4 then has a length in the x-direction X, a width in the y-direction Y, and a height in the z-direction Z.

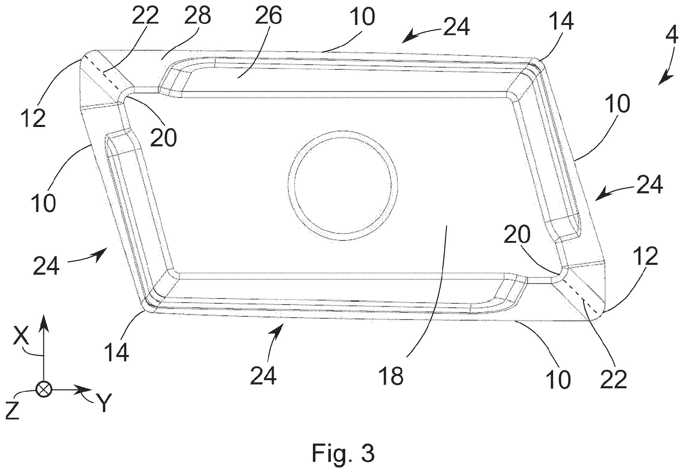

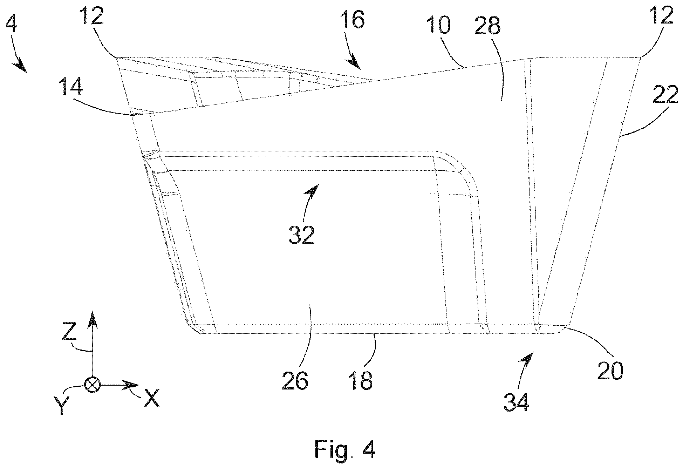

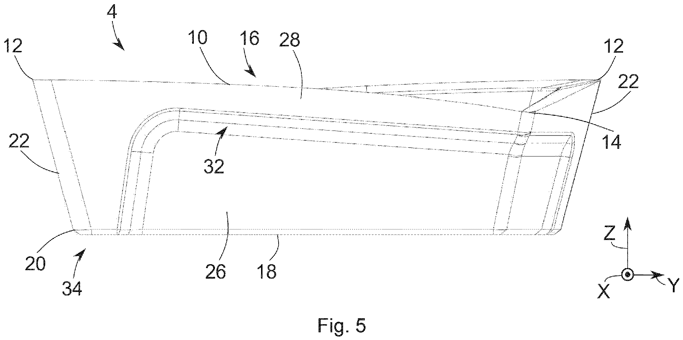

The cutting plate 4 also comprises a rear side 18 (also: bottom side) which lies opposite the front side 16. The rear side 18 can be seen particularly well in Fig. 3. Below the cutting corner 12, the rear side 18 comprises a corresponding (rear) corner 20, which is connected to the cutting corner 12 via a rim 22. This rim 22 thus lies below the cutting corner 12 and is also referred to as the cutting corner rim 22. The cutting corner rim 22 extends from the cutting corner 12 to the rear corner 20. The cutting corner rim 22 is rounded here, analogously to the cutting corner 12. The cutting corner rim 22 roughly extends in the z-direction Z, but is regularly placed at an angle relative thereto so that the cutting plate 4 extends from the rear side 18 and widens towards the front side 16, i.e., the width and length increase. This can be seen particularly well in Figs. 4 and 5. The rear side 18 of the cutting plate 4 can be congruent or also twisted in relation to the cutting edges 10 or the front side 16 in the x and y directions. The rear side 18 can also be slightly twisted towards the front side 16.

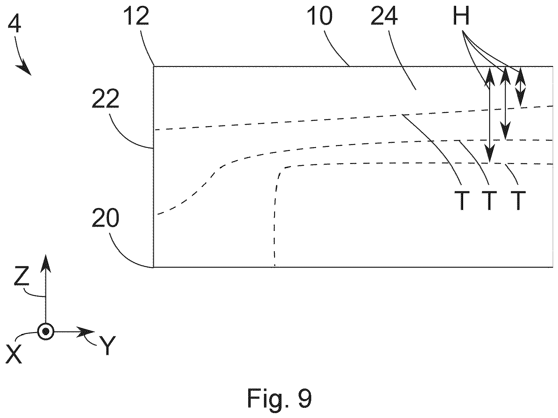

The cutting plate 4 also comprises a lateral face 24, having a contact face 26 and a clearance face 28, so that the lateral face 24 is subdivided into two sub-faces. Here, the lateral face 24 is divided into the clearance face 28 on the one hand and the contact face 26 on the other hand by an imaginary separating line T. The clearance face 28 lies on one side of the separating line T and the contact face 26 lies on the other side, and both meet quasi-jointly at the separating line T. Fig. 9 shows, by way of example, three possible separating lines T for an abstracted lateral face 24. These separating lines T differ in their course and, more specifically, how they meet the cutting corner rim 22.

The contact face 26 abuts the plate seat 8. Typically, as can be seen in Figs. 2 to 8, the contact face 26 is placed obliquely (i.e., at an angle greater than 0° to the z-direction Z), such that when the cutting plate 4 is fastened, it is pulled into the plate seat 8. The contact face 26 is also planar in and of itself.

The clearance face 28 is circumscribed by the cutting edge 10 and, when viewed in the z-direction Z, protrudes and projects beyond the plate seat 8, so that the cutting edge 10 can be engaged with the workpiece during operation. In the configurations shown herein, the clearance face 28 extends along the entire cutting edge 10. The clearance face 28 lies between the cutting edge 10 and the contact face 26, so that the latter does not reach up to the cutting edge 10.

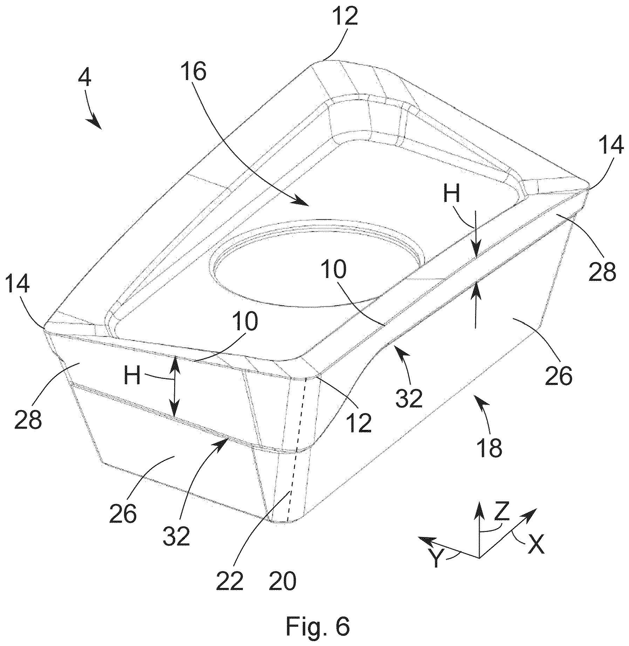

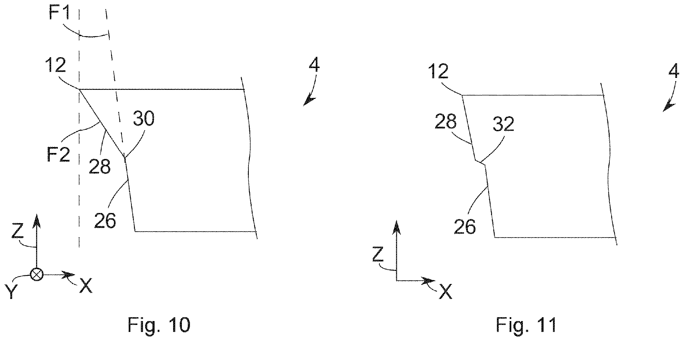

At least at the cutting corner 12, the clearance face 28 protrudes in relation to the contact face 26. This can be seen particularly well in the perspective views of Figs. 2, 6, 7, and 8. As a result, the cutting plate 4 is reinforced in the region of the cutting corner 12, namely starting from the cutting corner 12 either entirely along the cutting corner rim 22, as in Fig. 2, or partially along the cutting corner rim 22, as in Figs. 6, 7, and 8. The clearance face 28 is designed independently from the contact face 26, namely with the goal of achieving a reinforcement of the cutting plate 4 at least in the region of the cutting corner 12. It is important that the clearance face 28 does not merely protrude in and of itself, e.g., simply in the x- and/or y-direction X, Y and at an angle to the z-direction Z, but that the clearance face 28 protrudes in relation to (i.e., relative to) the contact face 26. In other words, the contact face 26 serves as the reference plane and the clearance face 28 projects outwardly in relation to that reference plane. In this case, two variants are generally possible, one being a simple kink 30 in the lateral face 24, such that the clearance face 28 and the contact face 26 extend at different angles F1, F2 (angled arrangement of the clearance face 28 and contact face 26), and the other being a step 32, so that the clearance face 28 is offset from the contact face 26 (offset arrangement of the clearance face 28 and contact face 26). The variant with the kink 30 is illustrated in Fig. 10, which shows a cross-sectional view of a lateral face 24. Analogously, the variant with the step 32 is illustrated in Fig. 11, which also shows a cross-sectional view of a lateral face 24. A step 32 can also be seen in Figs. 2 to 8. Both variants can also be combined with one another.

The phrase "at the cutting corner 12" means a region adjacent to and/or in the immediate vicinity of the cutting corner 12, specifically the part of the lateral face 24 that lies below the cutting corner 12, i.e., starting from the cutting corner 12 and between the latter and the rear side 18, specifically along the cutting corner rim 22.

The path of the separating line T is formed by the kink 30 or the step 32, and the separating line T is therefore not explicitly shown in Figs. 2 to 8. The separating line T has, for example, an S-shaped path (cf. Figs. 6, 7, 8, 9) or an L-shaped path (cf. Figs. 2, 9), generally a buckling path. In the case of the S-shaped path, the separating line T at a first curvature in the direction of the cutting corner rim 22 first drops down in the direction of the rear side 18, in order to then again extend in the direction of the cutting corner rim 22 at a second curvature, which is curved opposite to the first curvature. On the other hand, in the case of an L-shaped curve, the separating line T only buckles once, namely it first runs in the direction of the cutting corner rim 22 and then bends at a kink point towards the rear side 18, so that the separating line T comprises a total of two legs, a horizontal leg and a vertical leg. Alternatively or additionally, the clearance face 28 and the contact face 26 meet at the separating line T which runs along the lateral face 24 in the direction of the cutting corner rim 22 and simply drops off towards the rear side 18 of the cutting plate 4. Due to the S- or L-shaped path that generally leads in the direction of the rear side 18 of the separating line T, the clearance face 28 has an increased height in the direction of the cutting corner rim 22, and the cutting corner 12 is accordingly reinforced, because the greater height of the clearance face 28 in the region of the cutting corner 12 now means that the cutting plate 4 is more solid. In principle, however, the separating line T can also simply be straight (cf. 2, 6, 9), and a reinforcement is thus already achieved at the cutting corner 12.

In the present case, the clearance face 28 and the contact face 26 are connected via a deburred transition, e.g., a hollow groove, i.e., in Figs. 2 to 8, the step 32 comprises a deburred transition, such that a transition with an inner radius is realized between the clearance face 28 and the contact face 26.

In a first variant, in order to form the clearance face 28 so as to protrude in relation to the contact face 26, the clearance face 28 is offset from the contact face 26 by a step 32, as shown in Figs. 2 to 8 and 11. The step 32 extends entirely or partially along the separating line T and traces its path accordingly. The result of the step 32 is that the clearance face 28 protrudes in relation to the contact face 26. As a result, the clearance face 28 is displaced in the x- or y-direction X, Y in relation to the contact face 26. With the step 32, the clearance face 28 represents a shoulder in relation to the contact face 26. A clearance face 28, which protrudes due to a step 32, is also referred to as a balcony, because it has a similar appearance as a building with a balcony. Overall, the result of the step 32 is that the cutting plate 4 is formed more solidly than without the step 32, due to the offset clearance face 28. This reinforces the cutting corner 12.

In a second variant, in order to form the clearance face 28 so as to protrude in relation to the contact face 26, the clearance face 28 has a greater clearance angle F1, F2 than the contact face 26, as shown by way of example in Fig. 10. The clearance angle F1, F2 refers to the angle that is formed by the lateral face 24 and the workpiece while machining the latter. This clearance angle F1, F2 is positive in the present case. In the present case, the clearance angle F1, F2 is now varied, namely such that the clearance angle F1, F2 changes from the contact face 26 to the clearance face 28. The clearance angle F1 of the contact face 26 is specified by the plate seat 8 of the carrier 6. However, along the clearance face 28, the clearance angle F2 can be varied. In the present case, the clearance angle F2 of the clearance face 28 is greater than the clearance angle F1 of the contact face 26, such that the cutting plate 4 widens more strongly along the clearance face 28 than along the contact face 26, when viewed from the rear side 18 to the front side 16. Starting from the cutting edge 10 and viewed in the direction of the rear side 18, the clearance angle F2 of the clearance face 28 is constant (cf. Fig. 10) or varies along the clearance face 28 (not shown). Also viewed along the cutting edge 10, i.e., depending on the orientation in the x- or y-direction X, Y, the clearance angle F2 is either constant or varied. The clearance angle F1 of the contact face 26, on the other hand, is constant on the entire contact face 26, so that it is configured so as to be planar overall.

In the exemplary embodiment of Figs. 2 to 5, the clearance face 28 at the cutting corner 12 extends to the rear side 18 of the cutting plate 4. In other words, the clearance face 28 extends along the entire cutting corner rim 22. In this manner, the cutting plate 4 is reinforced along the entire cutting corner rim 22. Specifically in the case of a step 32, but also in general, a foot 34 is formed by the clearance face 28, on which the cutting corner 12 quasi stands.

The clearance face 28 has a height H that is measured between the cutting edge 10 (i.e., the front side 16) and the contact face 26 (i.e., the separating line T). In a possible embodiment, the height H varies along the cutting edge 10, e.g., in that the cutting edge 10 extends in a bent manner, in that the separating line T extends in a bent manner, or in that the separating line T and the cutting edge 10 extend in a straight manner, but not parallel to one another.

The cutting plates 4 shown here are indexable insert plates and are polygonal in shape, specifically quadrilateral, having a circumferential contour that circumscribes the front side 16 and four edges, all of which are formed as a cutting edge 10 in the present case. Of the four corners 12, 14, two that lie opposite one another are formed as cutting corners 12. Accordingly, there are also four lateral faces 24, one for each cutting edge 10.

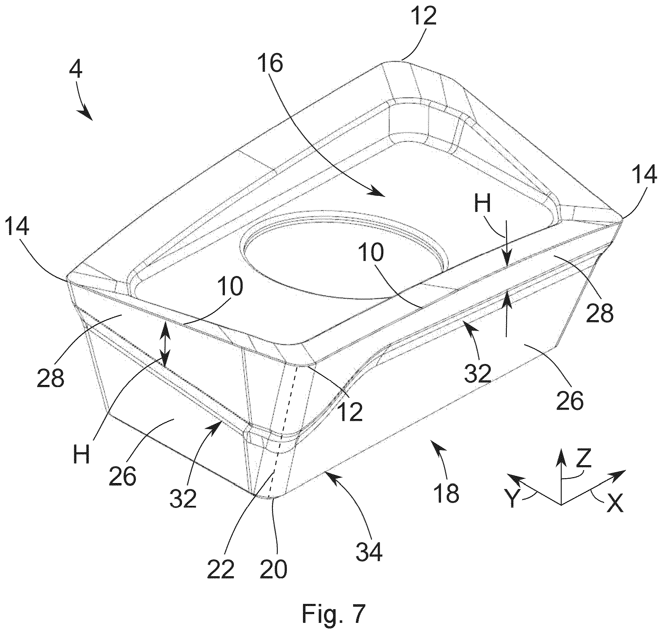

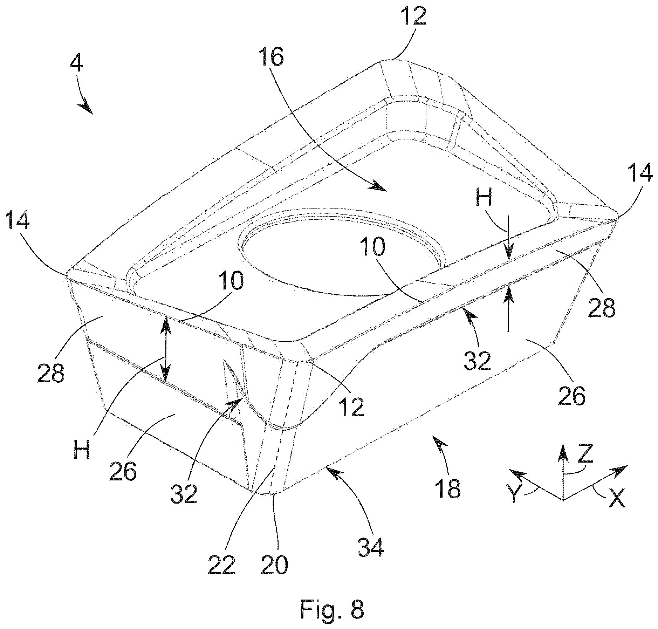

The statements made here regarding the cutting edge 10 and the lateral face 24 also apply analogously for one, a plurality of, or all further cutting edges 10 and lateral faces 24 of the cutting plate 4. The cutting edges 10 are not necessarily the same length, e.g., as shown in Figs. 2 to 8, one of the cutting edges 10 is a short cutting edge and the other cutting edge 10 is a long cutting edge. The various lateral faces 24, and in particular the separating lines T, are not necessarily the same nor do they necessarily mirror one another, rather they can also be designed independently from one another, as shown in Figs. 2 to 8. In this way, many different embodiments are possible. However, in the embodiments shown here, the two separating lines T of adjacent lateral faces 24 meet at the cutting corner rim 22. Specifically in Fig. 8, the two separating lines T, i.e., in this case the two steps 32, together form a u- or v-shape, having a tip facing in the direction of the rear side 18, so that specifically the cutting corner 12 is reinforced. Alternatively or additionally, as shown in Figs. 6 and 7, the separating line T (step 32) of the one lateral face 24 is straight and the separating line T (step) of the other lateral face 24 is S-shaped. Alternatively or additionally, both separating lines T are S or L-shaped, e.g., L-shaped as shown in Fig. 2.

## Claims

1. A tool (2),
a. comprising at least one cutting plate (4) for machining a workpiece,
b. comprising a carrier (6), having a plate seat (8) for the cutting plate (4),
c. wherein the cutting plate (4) comprises at least one cutting edge (10) for machining the workpiece,
d. wherein the cutting plate (4) comprises at least one cutting corner (12) where the cutting edge (10) terminates,
e. wherein the cutting plate (4) comprises at least one lateral face (24), having a contact face (26) and a clearance face (28),
f. wherein the contact face (26) abuts the plate seat (8),
g. wherein the clearance face (28) is circumscribed by the cutting edge (10),
h. wherein, at least at the cutting corner (12), the clearance face (28) protrudes in relation to the contact face (26).

2. The tool (2) according to claim 1,
wherein the clearance face (28) and the contact face (26) are separated by a separating line (T) having an S-shaped or L-shaped path.

3. The tool (2) according to claim 1 or 2,
wherein the cutting plate (4) comprises a rear side (18) having a rear corner (20),
wherein the cutting plate (4) comprises a cutting corner rim (22) extending from the cutting corner (12) to the rear corner (20),
wherein the clearance face (28) and the contact face (26) meet at a separating line (T) which runs along the lateral face (24) in the direction of the cutting corner rim (22) and drops off towards the rear side (18) of the cutting plate (4).

4. The tool (2) according to any one of claims 1 to 3,
wherein the clearance face (28) and the contact face (26) are connected via a deburred transition.

5. The tool (2) according to any one of claims 1 to 4,
wherein the clearance face (28) is offset from the contact face (26) by a step (32).

6. The tool (2) according to any one of claims 1 to 5,
wherein the clearance face (28) has a larger clearance angle (F1, F2) than the contact face (26).

7. The tool (2) according to any one of claims 1 to 6,
wherein the clearance face (28) at the cutting corner (12) extends to the rear side (18) of the cutting plate (4).

8. The tool (2) according to any one of claims 1 to 7,
wherein the clearance face (28) has a height (H) that is measured between the cutting edge (10) and the contact face (16),
wherein the height (H) varies along the cutting edge (10).

9. The tool (2) according to any one of claims 1 to 8,
wherein the cutting plate (4) comprises a further cutting edge (10) that terminates at the cutting corner (12),
wherein the cutting plate (4) comprises a further lateral face (24), having a further contact face (26) and a further clearance face (28),
wherein the further contact face (26) abuts the plate seat (8),
wherein the further clearance face (28) is circumscribed by the further cutting edge (10),
wherein, at least at the cutting corner (12), the further clearance face (28) protrudes in relation to the further contact face (26).

10. The tool (2) according to any one of claims 1 to 9,
wherein the cutting plate (4) is an indexable insert plate.

11. The tool (2) according to any one of claims 1 to 10,
wherein the latter is configured as a milling tool.

12. A cutting plate (4) for a tool (2) according to any one of claims 1 to 11.
